# EUROPÄISCHE PATENTANMELDUNG

(11) **EP 0 865 971 A2**
(43) Veröffentlichungstag der Anmeldung: **23.09.1998**
(21) Anmeldenummer: 98102099.3
(22) Anmeldetag: 06.02.1998
(51) Int. Cl.: B60R 21/16

(54) **Knieschutzsystem für Kraftfahrzeuge**

(30) Priorität: 20.03.1997 DE 19711688
(71) Anmelder: Bayerische Motoren Werke Aktiengesellschaft, 80788 München (DE)
(72) Erfinder: Taubenberger, Josef, 83052 Bruckmühl (DE); Rathgeber, Hans, Dr., 80935 München (DE); Rackl, Gerhard, 85356 Freising (DE)

(57) **Zusammenfassung**

Knieschutzsystem für Kraftfahrzeuge, bestehend aus einem Luftsackmodul mit einem im Aufprallbereich der Knie eines Insassen angeordneten Luftsack, der an zwei Einspannstellen mit dem Fahrzeug fest verbunden ist. Zur Vergrößerung des Verzögerungsweges ist vorgesehen, daß der Luftsack an mindestens einer Einspannstelle über einen Kraftbegrenzer mit dem Fahrzeug verbunden ist.

## Beschreibung

Die Erfindung betrifft ein Knieschutzsystem für Kraftfahrzeuge, bestehend aus einem Luftsackmodul mit einem im Aufprallbereich der knie eines Insassen angeordneten Luftsack, der an zwei Einspannstellen mit dem Fahrzeug fest verbunden ist.

Bei einem derartigen Knieschutzsystem, das auch als aktiver Knieschutz bezeichnet wird, entfaltet sich im Falle einer plötzlichen Verzögerung des Fahrzeugs der Luftsack zwischen der Unterverkleidung und dem Knie des Insassen. Durch die Entfaltung des Luftsacks soll das Knieschutzsystem an den Insassen herangeführt werden, so daß dieser möglichst frühzeitig an der Verzögerung des Kraftfahrzeugs teilnimmt. Nachteilhaft bei einem solchen aktiven Knieschutzsystem ist aber der ungünstige Kraftverlauf des Luftsacks. Unmittelbar nach der Aktivierung des Luftsackmoduls muß der Luftsack hinreichend prall aufgeblasen werden, um ein Durchschlagen der Knie des Insassen gegen die Unterverkleidung des Kraftfahrzeugs zu verhindern. Da die auf den Luftsack ausgeübten Kräfte unter anderem vom Gewicht des Insassen abhängen, ist es aber praktisch nicht möglich, das Luftsackmodul so auszulegen, daß es für Insassen unterschiedlichen Gewichts eine optimale Verzögerung bewirkt.

Es ist auch ein passiver Knieschutz bekannt, bei dem im Aufprallbereich der Knie eine energieverzehrende Polsterung in das Fahrzeug starr eingebaut ist. Diese Polsterung ist von der Formgebung der Verkleidungsteile abhängig und beeinträchtigt den Bewegungsraum. Ein wesentlicher Nachteil besteht darin, daß wegen des Abstandes der Knie von der Polsterung in normaler Sitzposition der Insasse erst später an der Verzögerung des Fahrzeugs teilnimmt, was zu einer stärkeren Belastung des Insassen führt.

Der Erfindung liegt die Aufgabe zugrunde, das gattungsgemäße aktive Knieschutzsystem dahingehend weiterzubilden, daß der Insasse unabhängig von seinem Gewicht bei einem Unfall besser geschützt ist.

Erfindungsgemäß wird diese Aufgabe dadurch gelöst, daß der Luftsack an mindestens einer Einspannstelle über einen Kraftbegrenzer mit dem Fahrzeug verbunden ist. Durch einen solchen Kraftbegrenzer wird die Verzögerung, das heißt die Kennung des Luftsacks verbessert, indem der zur Verfügung stehende Weg zum Verzögern der Knie des Insassen vergrößert wird. Wenn bei einem Unfall das Luftsackmodul aktiviert und der Luftsack aufgeblasen wird, dann fängt dieser die Knie des Insassen ab, wobei er sich verformt. Nach Überschreiten einer vorbestimmten Verzögerungskraft wird der Kraftbegrenzer wirksam und ermöglicht eine Bewegung des gesamten Luftsacks unter der aufgebrachten Belastung.

Der Kraftbegrenzer ist vorzugsweise ein energieverzehrendes Element. Ein solches energieverzehrendes Element ist vorzugsweise ein plastisch verformbares Element. Ein plastisch verformbares Element hat gegenüber einem auf Reibung beruhenden energieverzehrenden Element den Vorteil, daß sich der Verlauf der Kraft-Weg-Kennlinie genau definieren läßt.

Das plastisch verformbare Element kann beispielsweise als Stauchrohr ausgebildet sein. Ein für den angestrebten Zweck besonders günstiger Verlauf der Kraft-Weg-Kennlinie kann mit einem als Stülprohr oder als Wellrohr ausgebildeten plastisch verformbaren Element erzielt werden.

Der Luftsack umfaßt vorzugsweise ein Hüllgewebe mit sich diagonal kreuzenden Fäden. Ein solches Hüllgewebe hat den Vorteil, daß sich der Luftsack beim Aufblasen verkürzt und dadurch zwischen den beiden Einspannstellen gestrafft wird.

Für eine langsame Verzögerung, das heißt für ein weiches Abfangen der Knie des Insassen ist es vorteilhaft, wenn der Luftsack ausströmfähig ist. Aus einem solchen Luftsack wird im Ernstfall durch die aufprallenden Knie eines Insassen zunächst die Luft verdrängt, wodurch die Knie sanft verzögert werden, und wenn das Dämpfungsvermögen des Luftsacks aufgebraucht ist, dann wird der an einer oder an beiden Einspannstellen angebrachte Kraftbegrenzer wirksam und ermöglicht einen zusätzlichen Verzögerungsweg.

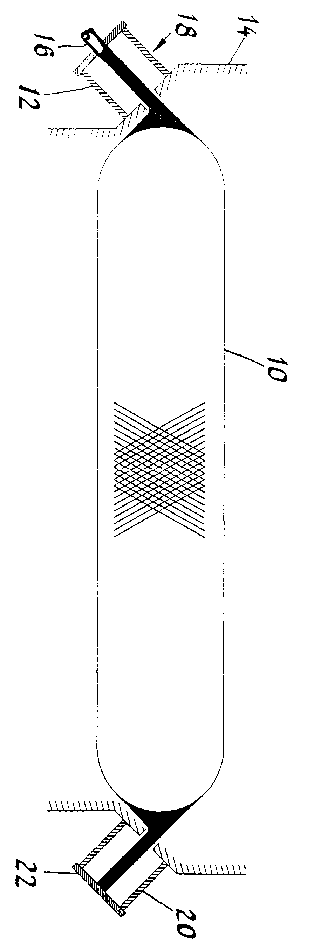

Nachfolgend wird die Erfindung anhand eines in der Zeichnung dargestellten bevorzugten Ausführungsbeispiels näher erläutert.

Die einzige Figur der Zeichnung zeigt eine schematische Draufsicht auf einen Luftsack im aufgeblasenen Zustand.

Ein schlauchförmiger Luftsack 10 ist an seinen beiden Endbereichen mit Ansätzen 12 versehen, die zu seiner Befestigung an einer andeutungsweise gezeigten Unterverkleidung 14 eines Kraftfahrzeugs dienen. Der linke Ansatz 12 dient zugleich als Zuleitung 16, über die der Luftsack 10 mit einem (nicht gezeigten) Generator verbunden ist. Der Luftsack 10 besteht aus einem Gewebe mit sich diagonal kreuzenden Fäden. Der schräge Verlauf der Fäden zur Längsachse des Luftsacks 10 hat zur Folge, daß sich dieser beim Aufblasen verkürzt. Das Gewebe des Luftsacks 10 ist nicht dicht, sondern ausströmfähig. Der Luftsack 10 ist im Bereich seiner beiden Ansätze 12 über einen Kraftbegrenzer 18 an der Unterverkleidung 14 befestigt. Die beiden Kraftbegrenzer 18 sind identisch ausgebildet und bestehen aus einem an der Unterverkleidung 14 befestigten Stauchrohr 20, an dessen freiem Ende sich ein Deckel 22 abstützt. Der Deckel 22 ist mit dem Stauchrohr 20 fest verbunden, beispielsweise verschweißt. Die beiden Ansätze 12 des Luftsacks 10 sind durch eine Öffnung der Unterverkleidung 14 geführt und mit dem Deckel 22 des zugeordneten Stauchrohrs 20 fest verbunden. Die Art der Verbindung des Ansatzes 12 mit dem Deckel 22 kann auf verschiedene Weise ausgeführt werden und ist in der Zeichnung nicht näher dargestellt.

Im Fall eines Aufpralls des Kraftfahrzeugs wird der (nicht gezeigte) Generator ausgelöst, um den Luftsack 10 über die Zuleitung 16 und den linken Ansatz 12 aufzublasen. Dadurch wird der ursprünglich schaffe Luftsack 10 axial verkürzt und zwischen den beiden von den Kraftbegrenzern 18 gebildeten Einspannstellen gestrafft. Sobald die Knie des Insassen auf den aufgeblasenen Luftsack 10 auftreffen, wird das Gas aus diesem ausgepreßt, und die Knie können sich in den Luftsack hineindrücken. Die maximale Verzögerungskraft wird erreicht, wenn der Luftsack 10 plattgedrückt ist und seine Wandungen im Kniebereich aufeinanderliegen. Diese Verzögerungskraft wird von den beiden Ansätzen 12 des Luftsacks 10 auf den zugeordneten Deckel 22 und von diesem über das Stauchrohr 20 auf die Unterverkleidung 14 übertragen. Wenn diese Verzögerungskraft einen vorbestimmten Grenzwert überschreitet, dann hat dies eine plastische Verformung der beiden Stauchrohre 20 zur Folge. Durch diese plastische Verformung der beiden Stauchrohre 20 wird einerseits Energie vernichtet und andererseits ein zusätzlicher Verzögerungsweg geschaffen. Da die auf die Knie des Insassen ausgeübte Verzögerungskraft zum Verzögerungsweg umgekehrt proportional ist, wird somit die auf die Knie ausgeübte Belastung verringert.

Durch die beiden Kraftbegrenzer 18 wird somit die Verzögerungskennung des Luftsacks 10 verbessert bzw. seine Wirkdauer verlängert, weil erst der Luftsack und dann die beiden Kraftbegrenzer verformt werden.

Abweichend von dem gezeigten Ausführungsbeispiel könnte das Stauchrohr 20 der beiden Kraftbegrenzer 18 auch als Stülprohr oder als Wellrohr ausgebildet sein. Der Kraftbegrenzer könnte auch so ausgebildet sein, daß die Energie durch Reibung vernichtet wird. Bei einem derartigen Reibungs-Kraftbegrenzer ist die Kraft-Weg-Kennlinie allerdings nicht eindeutig definiert.

Bei einer konstruktiv vereinfachten Ausführungsform des Knieschutzsystems könnte der Luftsack 10 nur im Bereich eines Ansatzes 12 über einen Kraftbegrenzer 18 mit der Unterverkleidung 14 verbunden sein und mit dem anderen Ansatz 12 unmittelbar mit der Unterverkleidung 14 verbunden sein.

### Bezugszeichenliste:

- 10: Luftsack
- 12: Ansatz
- 14: Unterverkleidung
- 16: Zuleitung
- 18: Kraftbegrenzer
- 20: Stauchrohr
- 22: Deckel

## Patentansprüche

1. Knieschutzsystem für Kraftfahrzeuge, bestehend aus einem Luftsackmodul mit einem im Aufprallbereich der Knie eines Insassen angeordneten Luftsack, der an zwei Einspannstellen mit dem Fahrzeug fest verbunden ist, dadurch **gekennzeichnet**, daß der Luftsack an mindestens einer Einspannstelle über einen Kraftbegrenzer (18) mit dem Fahrzeug (14) verbunden ist.

2. Knieschutzsystem nach Anspruch 1 dadurch **gekennzeichnet**, daß der Kraftbegrenzer (18) ein energieverzehrendes Element umfaßt.

3. Knieschutzsystem nach Anspruch 2, dadurch **gekennzeichnet**, daß der Kraftbegrenzer (18) ein plastisch verformbares Element umfaßt.

4. Knieschutzsystem nach Anspruch 3, dadurch **gekennzeichnet**, daß das plastisch verformbare Element ein Stauchrohr (20) ist.

5. Knieschutzsystem nach Anspruch 3, dadurch **gekennzeichnet**, daß das plastisch verformbare Element ein Stülprohr ist.

6. Knieschutzsystem nach Anspruch 3, dadurch **gekennzeichnet**, daß das plastisch verformbare Element ein Wellrohr ist.

7. Knieschutzsystem nach einem der vorhergehenden Ansprüche, dadurch **gekennzeichnet**, daß der Luftsack (10) ein Hüllgewebe mit sich diagonal kreuzenden Fäden umfaßt.

8. Knieschutzsystem nach einem der vorhergehenden Ansprüche, dadurch **gekennzeichnet**, daß der Luftsack (10) ausströmfähig ist.
